# EUROPEAN PATENT APPLICATION

(11) **EP 4 300 634 A1**
(43) Date of publication of application: **03.01.2024**
(21) Application number: 23174929.2
(22) Date of filing: 23.05.2023
(51) Int. Cl.: H01M 4/62

(54) **CARBON BLACK DISPERSION COMPOSITION FOR BATTERY, MIXTURE PASTE FOR POSITIVE ELECTRODE, POSITIVE ELECTRODE FOR LITHIUM-ION SECONDARY BATTERY, AND LITHIUM-ION SECONDARY BATTERY**

(30) Priority: 30.05.2022 JP 2022087706
(71) Applicant: Shin-Etsu Chemical Co., Ltd., Tokyo (JP)
(72) Inventor: KOMATSUKI, Keiichi, Joetsu-shi (JP); NIINOBE, Shingo, Joetsu-shi (JP)
(74) Representative: Mewburn Ellis LLP

(57) **Abstract**

A carbon black dispersion composition for batteries contains carbon black, a dispersant, N-methyl-2-pyrrolidone, and from 0.0001 to 5 parts by weight of a hindered phenolic compound per 100 parts by weight of carbon black. The composition uses as the dispersing medium N-methyl-2-pyrrolidone, which increases the dispersibility of the carbon black, continues to maintain the dispersibility immediately after dispersion and provides an excellent shelf stability without expenditure of time and effort.

## Description

### TECHNICAL FIELD

The present invention relates to a carbon black dispersion composition for a battery, a mixture paste for a positive electrode, a positive electrode for a lithium-ion secondary battery, and a lithium-ion secondary battery.

### BACKGROUND

An advantage of lithium-ion secondary batteries is their high energy density. The rapid proliferation of portable devices such as mobile phones and notebook computers is a major factor in the growth of the market for such batteries and in the dramatic improvements that have been made in their performance. Given ongoing efforts to electrify automobiles and increase the efficiency of power storage systems as part of the movement toward a sustainable society, the market for lithium-ion secondary batteries is expected to continue to grow.

The positive electrode of a lithium-ion secondary battery includes primarily a positive electrode active material, a conductive additive, a binder and a current collector. Because the capacity of a lithium-ion secondary battery is determined largely by the amount of active material, in order to increase the capacity of the battery, it is desirable to reduce as much as possible the amount of materials therein other than the active material, such as the conductive additive. Indeed, conductive additives that have a higher specific surface area and are more highly structured are being developed so as to enable a high conductivity to be imparted when added in smaller amounts. However, with a higher specific surface area and higher structuring, the conductive additive has a greater tendency to agglomerate, making it difficult to achieve a uniform dispersion. As a result, this may lead to a rise in internal resistance due to non-uniformity of the conductive pathway within the electrode and to a shorter battery life owing to uneven charge distribution.

One approach commonly used recently to produce electrodes in which the conductive additive is kept from agglomerating and is uniformly dispersed involves using a polymeric dispersant to first uniformly disperse the conductive additive in a dispersing medium such as an organic solvent and thus prepare a dispersion of the conductive additive, and then creating a positive electrode mixture slurry by mixing the positive electrode active material and binder into the resulting conductive additive dispersion.

To obtain the conductive additive dispersion, it is desired that the conductive additive be in a uniform and easily dispersible state. It is also desired that the dispersed state of the conductive additive and the viscosity of the dispersion remain stable and unchanged during the period of storage from immediately after preparation of the dispersion until the electrode mixture slurry is created.

The reason is that when the conductive additive disperses poorly and agglomerates, the viscosity of the dispersion rises; a positive electrode mixture slurry created using this dispersion has a poor coatability and so a smooth coating of the mixture is not obtained. This leads as a result to non-uniformity of the conductive pathway within the electrode and also to a deterioration in battery performance.

The shelf stability of the dispersion is reflected in the change over time in the dispersed state of the conductive additive; when the change in the dispersed state due to storage is large, the variation in quality during positive electrode production rises.

Carbon black is generally used as the conductive additive. JP-A 2016-046188 describes, as a way of increasing the dispersibility and shelf stability of dispersions in which carbon black is used as the conductive additive, a dispersion in which an acidic compound such as a carboxylic acid has been added as an additional additive.

JP-A 2020-021632 describes, as art that does not use an additional additive in the conductive additive dispersion, a dispersion in which the dispersibility and shelf stability have been increased by controlling the viscosity characteristics of the dispersion within specific ranges.

Although JP-A 2016-046188 does not explain the mechanism by which the acidic compound acts on the carbon black dispersibility, presumably the carbon black dispersibility is increased by regulating the pH environment at the surface of the carbon black particles. However, there is a concern that acidic compounds may act upon the electrode mixture composition, causing chemical modification, and so their addition to carbon black dispersions is undesirable.

In the method described in JP-A 2020-021632, dispersion treatment must be continued until a dispersion having the target viscosity characteristics is achieved. This approach thus requires considerable time and effort, making it difficult to satisfy the desire in today's battery market for lower manufacturing costs and increased production.

### Citation List

Patent Document 1: JP-A 2016-046188
Patent Document 2: JP-A 2020-021632

### SUMMARY OF THE INVENTION

It is therefore an object of the present invention to provide a carbon black dispersion composition for batteries that uses N-methyl-2-pyrrolidone as the dispersing medium, which compound increases the dispersibility of the carbon black, continues to maintain the dispersibility immediately after dispersion, and imparts an excellent shelf stability without expenditure of time and effort. Additional objects of the invention are a mixture paste for a positive electrode, a positive electrode for a lithium-ion secondary battery and a lithium-ion secondary battery, all of which use the foregoing carbon black dispersion composition.

In the course of intensive investigations, we have discovered that the minute amount of radical species which form during the storage of N-methyl-2-pyrrolidone and during storage of the dispersion plays a large part in lowering the dispersibility of carbon black. We have also found that, to remove the influence of these radical species, the addition within a specific concentration range of a hindered phenolic compound which functions as a radical scavenger is effective for enhancing the dispersibility of carbon black within the dispersion and the long-term shelf stability.

Accordingly, in a first aspect, the invention provides a carbon black dispersion composition for a battery, which composition includes carbon black, a dispersant, N-methyl-2-pyrrolidone, and from 0.0001 to 5 parts by weight of a hindered phenolic compound per 100 parts by weight of the carbon black.

In a preferred embodiment of this aspect of the invention, the carbon black content is from 5 to 20 wt%.

In another preferred embodiment, the carbon black has a BET specific surface area of from 30 to 1,500 m²/g.

In yet another preferred embodiment, the dispersant is added in an amount of from 1 to 20 parts by weight per 100 parts by weight of the carbon black.

In still another preferred embodiment, the dispersant is at least one compound selected from the group consisting of methyl cellulose, (hydroxypropyl)methyl cellulose, polyvinyl alcohol and polyvinyl pyrrolidone.

In a further preferred embodiment, the hindered phenolic compound is at least one compound selected from the group consisting of 2,6-di-tert-butyl-p-cresol, pentaerythritol tetrakis[3-(3,5-di-tert-butyl-4-hydroxyphenyl)propionate], [oxalylbis(azanediyl)]bis(ethane-2,1-diyl) bis[3-(3,5-di-tert-butyl-4-hydroxyphenyl)propanoate], 2,4,6-tris(3',5'-di-tert-butyl-4'-hydroxybenzyl)mesitylene, 4-[[4,6-bis(n-octylthio)-1,3,5-triazine-2-yl]amino]-2,6-di-tert-butylphenol, 2,6-di-tert-butyl-4-methoxyphenol and 1,3,5-tris(3,5-di-tert-butyl-4-hydroxybenzyl)-1,3,5-triazine-2,4,6(1H, 3H, 5H)-trione.

In a second aspect, the invention provides a mixture paste for a positive electrode, which paste includes the carbon black dispersion composition of the first aspect of the invention, a positive electrode active material and a binder.

In a third aspect, the invention provides a positive electrode for a lithium-ion secondary battery, which positive electrode includes a current collector and a positive electrode mixture layer that is a dry coating of the foregoing mixture paste formed on the current collector.

In a fourth aspect, the invention provides a lithium-ion secondary battery which includes the foregoing positive electrode, a negative electrode, an electrolyte and a separator.

### ADVANTAGEOUS EFFECTS

This invention makes it possible to provide a carbon black dispersion composition for batteries which has an excellent carbon black dispersibility and excellent shelf stability. By using this carbon black dispersion composition, the percent defectives in the production of lithium-ion secondary batteries can be decreased and production costs can be reduced.

### FURTHER EXPLANATIONS; OPTIONS AND PREFERENCES

### Carbon Black Dispersion Composition for Batteries

The inventive carbon black dispersion composition for batteries includes carbon black, a dispersant, N-methyl-2-pyrrolidone, and from 0.0001 to 5 parts by weight of a hindered phenolic compound per 100 parts by weight of the carbon black.

### [Carbon Black]

Carbon black is added as the conductive additive in order to increase the electrical conductivity of electrodes formed of the foregoing carbon black dispersion composition for batteries. Examples of suitable carbon blacks include acetylene black, furnace black, thermal black and ketjen black. Of these, from the standpoint of the conductivity, acetylene black and ketjen black are preferred.

The carbon blacks used in electrodes are being rendered to increasingly high specific surface areas in order to exhibit good conductivity when added in small amounts. The BET specific surface area (specific surface area measured by the BET method) of carbon blacks that can be suitably used in electrode applications is preferably from 30 to 1,500 m²/g, more preferably from 40 to 1,200 m²/g, and even more preferably from 60 to 1,000 m²/g.

From the standpoint of the flowability and workability of the dispersion composition to be prepared, the carbon black content is preferably from 5 to 20 wt%, and more preferably from 6 to 18 wt%; that is, preferably from 5 to 20 parts by weight, and more preferably from 6 to 18 parts by weight, per 100 parts by weight of the total amount of the carbon black dispersion composition for batteries (preferably the sum of the carbon black, dispersant, N-methyl-2-pyrrolidone and hindered phenolic compound).

Other carbon materials, such as carbon nanotubes, graphene and graphite, may be included together with carbon black as conductive additives. When included together, such other carbon materials are added in an amount which is preferably from 5 to 20 parts by weight, and more preferably from 6 to 18 parts by weight, per 100 parts by weight of the total amount of the carbon black dispersion composition for batteries (preferably the sum of the carbon black, dispersant, N-methyl-2-pyrrolidone and hindered phenolic compound).

### [Dispersant]

The dispersant used in this invention is not particularly limited, so long as it increases the dispersibility of carbon black, but is preferably at least one selected from the group consisting of methyl cellulose (MC), (hydroxypropyl)methyl cellulose (HPMC), polyvinyl alcohol (PVA) and polyvinyl pyrrolidone (PVP). Of these, from the standpoint of exhibiting a good dispersibility at a small amount of addition, methyl cellulose and polyvinyl alcohol are preferred; methyl cellulose is more preferred.

The methoxy group degree of substitution (DS) in the methyl cellulose is preferably from 1.60 to 2.10, and more preferably from 1.70 to 2.00. Here and in the "Examples" section below, the methoxy group DS in the methyl cellulose can be determined by converting the values measurable by the degree of substitution analysis method for methyl cellulose described in the Japanese Pharmacopoeia, 18th Edition.

From the standpoint of dispersibility and stability, the viscosity of a 2 wt% aqueous solution of methyl cellulose at 20°C is preferably from 2.0 to 100.0 mPa s, and more preferably from 3.0 to 50.0 mPa·s. Here and in the "Examples" section below, the value used as this viscosity may be the viscosity of a 2 wt% aqueous solution of methyl cellulose at 20°C, as measured with the Ubbelohde viscometer specified in JIS K2283-1993.

The methoxy group DS in the (hydroxypropyl)methyl cellulose is not particularly limited, but is preferably from 1.60 to 2.10, and more preferably from 1.70 to 2.00. The hydroxypropoxy group molar substitution (MS) is preferably from 0.10 to 0.30, and more preferably from 0.13 to 0.27. The methoxy group DS and hydroxypropoxy group MS in the (hydroxypropyl)methyl cellulose can be determined by converting the values measurable by the degree of substitution analysis method for hypromellose ((hydroxypropyl)methyl cellulose) described in the Japanese Pharmacopoeia, 18th Edition.

From the standpoint of dispersibility and stability, the viscosity of a 2 wt% aqueous solution of (hydroxypropyl)methyl cellulose at 20°C is preferably from 2.0 to 100.0 mPa·s, and more preferably from 3.0 to 50.0 mPa·s. The viscosity of a 2 wt% aqueous solution of (hydroxypropyl)methyl cellulose at 20°C measured with the Ubbelohde viscometer specified in JIS K2283-1993 may be used as this viscosity.

The polyvinyl alcohol has a degree of saponification which, from the standpoint of the solubility in N-methyl-2-pyrrolidone, is preferably at least 78.0 mol%, and more preferably from 85.0 to 99.5 mol%. The polyvinyl alcohol degree of saponification can be measured by the method of measuring the degree of saponification described in JIS K6726.

The viscosity of a 4 wt% aqueous solution of polyvinyl alcohol at 20°C is preferably from 2.0 to 100.0 mPa·s, and more preferably from 3.0 to 50.0 mPa·s. The viscosity of a 4 wt% aqueous solution of polyvinyl alcohol at 20°C can be measured according to the measurement method described in JIS K6726.

The K-value of polyvinyl pyrrolidone is not particularly limited, but is preferably from 10 to 120, and more preferably from 15 to 100. The K-value of polyvinyl pyrrolidone can be measured according to the K-value measurement method described in the "Povidone" entry in the Japanese Pharmacopoeia, 18th Edition.

The amount of dispersant added, from the standpoint of the carbon black dispersity and the electrical characteristics of the electrode formed using the carbon black dispersion composition for batteries, is preferably from 1 to 20 parts by weight, and more preferably from 5 to 13 parts by weight, per 100 parts by weight of the carbon black in the composition. The dispersant content, from the standpoint of the carbon black dispersity and the electrical characteristics of the electrode formed using the carbon black dispersion composition for batteries, is preferably from 0.05 to 4 wt%, and more preferably from 0.25 to 2 wt%; that is, preferably from 0.05 to 4 parts by weight, and more preferably from 0.25 to 2 parts by weight, per 100 parts by weight of the total amount of the carbon black dispersion composition for batteries (preferably the sum of the carbon black, dispersant, N-methyl-2-pyrrolidone and hindered phenolic compound).

### [N-Methyl-2-Pyrrolidone]

N-methyl-2-pyrrolidone (NMP), which is an organic solvent used in the production of positive electrodes for lithium-ion batteries, is added as the carbon black-dispersing medium in the carbon black dispersion composition for batteries of the present invention.

The NMP content is not particularly limited. However, from the standpoint of the workability of the carbon black dispersion composition for batteries, the content is preferably from 80 to 95 wt%, and more preferably from 85 to 93 wt%; that is, preferably from 80 to 95 parts by weight, and more preferably from 85 to 93 parts by weight, per 100 parts by weight of the total amount of the carbon black dispersion composition for batteries (preferably the sum of the carbon black, dispersant, N-methyl-2-pyrrolidone and hindered phenolic compound).

Also, to increase the affinity among the ingredients (the ingredients of the carbon black dispersion composition for batteries and the mixture paste for positive electrodes), one or more other solvent may be used together. Examples of such solvents other than N-methyl-2-pyrrolidone include water, N-ethyl-2-pyrrolidone, N,N-dimethylformamide, N,N-dimethylacetamide, N,N-dimethylpropionamide, N,N-diethylacetamide and 4-acetylmorpholine. In this invention, it is preferable to use NMP alone as the solvent.

### [Hindered Phenolic Compound]

The present invention is characterized by including a hindered phenolic compound as a radical scavenger in the carbon black dispersion composition for batteries containing the above ingredients. By adding a hindered phenolic compound, radical species which form during storage and adversely affect the stability of the dispersion composition can be eliminated.

Examples of the hindered phenolic compound include 2,6-di-tert-butyl-p-cresol, pentaerythritol tetrakis[3-(3,5-di-tert-butyl-4-hydroxyphenyl)propionate], [oxalylbis(azanediyl)]bis(ethane-2,1-diyl)bis[3-(3,5-di-tert-butyl-4-hydroxyphenyl)propanoate], 2,4,6-tris(3',5'-di-tert-butyl-4'-hydroxybenzyl)mesitylene, 4-[[4,6-bis(n-octylthio)-1,3,5-triazine-2-yl]amino]-2,6-di-tert-butylphenol, 2,6-di-tert-butyl-4-methoxyphenol and 1,3,5-tris(3,5-di-tert-butyl-4-hydroxybenzyl)-1,3,5-triazine-2,4,6(1H, 3H, 5H)-trione. Of these, to avoid adverse effects on the battery performance, 2,6-di-tert-butyl-p-cresol and pentaerythritol tetrakis[3-(3,5-di-tert-butyl-4-hydroxyphenyl)propionate] are especially preferred.

The amount of hindered phenolic compound added per 100 parts by weight of the carbon black must be from 0.0001 to 5 parts by weight, and is preferably from 0.001 to 1 part by weight, and more preferably from 0.01 to 0.3 part by weight. At less than 0.0001 part by weight, the amount of addition is small and the radical species which adversely affect the stability of the composition cannot be fully eliminated, as a result of which the anticipated effects are not obtained. On the other hand, at more than 5 parts by weight, the viscosity of the composition decreases during storage. As a result, the viscosity of the positive electrode mixture paste that is subsequently prepared varies, the paste drips when it is coated onto the current collector, and mixture layer non-uniformity due to destabilization of the applied coating arises.

Also, for the same reasons as just mentioned, the content of the hindered phenolic compound is preferably from 0.000001 to 1 wt%, more preferably from 0.00001 to 0.2 wt%, and even more preferably from 0.0001 to 0.07 wt%; that is, preferably from 0.000001 to 1 part by weight, more preferably from 0.0001 to 0.2 part by weight, and even more preferably from 0.0001 to 0.007 part by weight, per 100 parts by weight of the total amount of the carbon black dispersion composition for batteries (preferably the sum of the carbon black, dispersant, N-methyl-2-pyrrolidone and hindered phenolic compound).

### [Other Ingredients]

The carbon black dispersion composition for batteries of the invention may also include other ingredients, insofar as doing so does not compromise the objects of the invention and does not detract from the carbon black dispersibility or the performance of the electrode produced therewith. Examples of such other ingredients include surfactants, antifoaming agents, pH adjustors and viscosity modifiers.

No particular limitation is imposed on the method for preparing the inventive carbon black dispersion composition for batteries, so long as the above ingredients are uniformly mixed and the carbon black is dispersible. For example, preparation may be carried out by a dispersion step in which a dispersion apparatus is used to apply dispersion treatment to the carbon black, dispersant, hindered phenolic compound, NMP and the like. At this time, the carbon black, dispersant and hindered phenolic compound that are the powder starting materials may be premixed, and this mixture may then be dispersed in NMP. Alternatively, the dispersant may first be dissolved in a solvent such as NMP, and the carbon black and the hindered phenolic compound subsequently mixed therein.

Examples of dispersion apparatuses that may be used include homogenizers, homogenizing dispersers, planetary mixers, paint conditioners, bead mills and thin-film spin-type high-speed mixers.

In the dispersion step, to further increase the dispersibility of the carbon black, dispersion may be carried out in a stepwise manner using a plurality of dispersion apparatuses. An example of one such process involves uniformly mixing together the powder starting materials (carbon black, dispersant, hindered phenolic compound) with the dispersing medium (NMP) in a homogenizing disperser or a planetary mixer, and then dispersing the carbon black as fine particles in a bead mill or a thin-film spin-type high-speed mixer.

### Positive Electrode Mixture Paste

The positive electrode mixture paste of the invention includes the inventive carbon black dispersion composition for batteries described above, a positive electrode active material and a binder, and can be used in the production of positive electrodes for lithium-ion secondary batteries.

The positive electrode active material is not particularly limited, provided that it is a material which can be used in the positive electrode of a lithium-ion secondary battery. A lithium-containing transition metal oxide or a transition metal in which some of the transition metal included in such a transition metal oxide has been replaced with a different type of element may be used. Specific examples of the latter include lithium cobaltate, lithium nickelate, lithium manganate, ternary (NCM) active materials and NCA active materials. Also, unlike the foregoing oxide-based active materials, by introducing a polyvalent anion such as the phosphoric acid ion (PO₄³⁻) or the silicic acid ion (SiO₄⁴⁻), a polyanionic positive electrode active material in which the ionicity of the transition metal has been increased may be used. Specific examples include lithium iron phosphate and lithium iron silicate.

The content of the positive electrode active material is preferably from 35 to 80 wt%, and more preferably from 40 to 70 wt%; that is, preferably from 35 to 80 parts by weight, and more preferably from 40 to 70 parts by weight, per 100 parts by weight of the mixture paste for positive electrodes. At a positive electrode active material content below 35 wt%, the energy density within the completed battery becomes poor; at more than 80 wt%, the positive electrode mixture paste becomes hard, which may make the paste difficult to coat onto the current collector.

From the standpoint of the durability of the positive electrode mixture layer to be formed, the binder is preferably a fluoropolymer material, examples of which include polyvinylidene fluoride, polyvinyl fluoride and tetrafluoroethylene. From the standpoint of the integrity and coatability of the positive electrode mixture paste, the polymeric material used as the binder has a weight-average molecular weight that is preferably from 200,000 to 1,2000,000, and more preferably from 600,000 to 1,000,000.

The weight-average molecular weight of the polymeric material used as the binder can be measured by a known method such as gel permeation chromatography.

The binder content is from 0.3 to 10 wt%, and preferably from 0.5 to 6 wt%; that is, preferably from 0.3 to 10 parts by weight, and more preferably from 0.5 to 6 parts by weight, per 100 parts by weight of the positive electrode mixture paste. At a binder content of less than 0.3 wt%, the strength of the positive electrode mixture layer is inadequate, and peeling or cracking of the mixture layer may occur. On the other hand, at a binder content of more than 10 wt%, the electrical resistance at the interior of the electrode may rise.

The positive electrode mixture paste of the invention can be prepared by mixing together the above-described carbon black dispersion composition for batteries of the invention, a positive electrode active material and a binder. The dispersion apparatuses mentioned in the above-described method for preparing the carbon black dispersion composition for batteries may be used as the mixing apparatus.

When preparing the positive electrode mixture paste, a solvent may be supplementarily added in order to adjust the viscosity. Any of the solvents mentioned above in connection with the inventive carbon black dispersion composition for batteries (e.g., NMP) may be used as this solvent.

The amount of solvent (such as NMP) included in the positive electrode mixture paste at this time (i.e., the sum of the amount of NMP included in the carbon black dispersion composition for batteries and the amount of supplementarily added NMP) is preferably from 10 to 70 wt%, and more preferably from 20 to 60 wt%.

No particular limitations are imposed on the order in which the materials are charged during mixture; all the materials may be added and mixed together at the same time, or the mixing operation may be carried out in a stepwise manner by first mixing together the binder, positive electrode active material and solvent and then adding and mixing in the carbon black dispersion composition for batteries. In the case of the binder, to prevent the admixture of foreign matter such as undissolved lumps in the positive electrode mixture paste, it is recommended that a solution be prepared beforehand by dissolving the binder in the solvent to be used and that the solution then be added to the other materials.

The positive electrode mixture paste of the invention is suitable for the production of positive electrodes for lithium-ion secondary batteries. Specifically, a positive electrode for a lithium-ion secondary battery can be produced by applying the positive electrode mixture paste to a predetermined thickness on a current collector so as to form a coating, drying the applied coating, and having the resulting dry coating serve as a positive electrode mixture layer.

A film/foil made of a metal such as iron, stainless steel, copper, aluminum or nickel, or an alloy thereof, is used here as the current collector. From the standpoint of the stability of the potential in the positive electrode, aluminum is especially preferred. Surface treatment such as carbon coating may be applied to the current collector in order to lower the interfacial resistance.

The apparatus used to coat the positive electrode mixture paste onto the current collector is not particularly limited and may be, for example, a knife coater, comma coater, die coater or gravure coater. To increase the electrical resistance of the electrode and the integrity of the positive electrode mixture layer, the positive electrode mixture paste that has been coated onto the current collector or the dry coating of positive electrode mixture paste may be subjected to rolling treatment with a roll press or the like.

The coating thickness of the positive electrode mixture paste is preferably from 50 to 1,000 µm, and more preferably from 100 to 500 µm.

Following application, the coating of positive electrode mixture paste is dried in a drying oven. The drying temperature and time are preferably between 50°C and 180°C and from 0.5 to 1,200 minutes, and more preferably between 60°C and 140°C and from 1 to 600 minutes.

A positive electrode for a lithium-ion secondary battery having a current collector and a positive electrode mixture layer that is a dry coating of the positive electrode mixture paste of the invention can thereby be obtained. The thickness of the positive electrode mixture layer at this time is preferably from 10 to 800 µm, and more preferably from 30 to 400 µm.

### Lithium-Ion Secondary Battery

The lithium-ion secondary battery of the invention is comprised of a positive electrode for lithium-ion secondary batteries that includes the above-described positive electrode mixture layer of the invention, a negative electrode, an electrolyte and a separator, and has a structure in which the separator is sandwiched between the positive electrode for lithium-ion secondary batteries and the negative electrode and has been impregnated with the electrolyte in a closed state.

The negative electrode of the lithium-ion secondary battery has a negative electrode mixture layer on one or both sides of a negative electrode current collector.

As with the current collector in the positive electrode for lithium-ion secondary batteries, a metal or alloy film/foil may be used as the negative electrode current collector. However, from the standpoint of the stability of the potential in the negative electrode, copper foil or nickel foil is preferred.

The negative electrode mixture layer includes one or more type of negative electrode active material capable of the reversible intercalation of lithium ions, and may also optionally include a negative electrode binder, a negative electrode conductive additive and a negative electrode dispersant.

The negative electrode active material is not particularly limited, provided that it is a material which can be used as a negative electrode active material in lithium-ion secondary batteries. Specific examples include carbon-based negative electrode materials such as natural graphite and synthetic graphite, oxide-based negative electrode materials such as lithium titanate, and silicon-based negative electrode materials such as nanosilicon, silicon alloys and silicon monoxide.

One or more polymeric material, synthetic rubber or the like may be used as the negative electrode binder. Examples of polymeric materials include polyvinylene fluoride, polyimides, polyamideimides, aramids, polyacrylic acids, lithium polyacrylate and carboxymethylcellulose sodium. Examples of synthetic rubbers include styrene-butadiene rubbers, fluororubbers and ethylene-propylene dienes.

One or more carbon material such as acetylene black, ketjen black, graphite, carbon nanotubes and carbon nanofibers may be used as the conductive additive for negative electrodes.

One or more of the following may be used as the negative electrode dispersant: methyl cellulose, (hydroxypropyl)methyl cellulose, ethyl cellulose, carboxymethylcellulose sodium, polyvinyl alcohol, polyvinyl pyrrolidone, polyurethane and the like.

The separator electronically insulates the positive electrode for lithium-ion secondary batteries from the negative electrode, preventing the shorting of current associated with contact between the two electrodes, and also, due to impregnation with the electrolyte, allows lithium ions to pass through. This separator is formed of a porous membrane made of, for example, a synthetic resin or ceramic, and may have a layered structure composed of two or more porous membranes. Examples of the synthetic resin include polytetrafluoroethylene, polypropylene and polyethylene. The ceramic is exemplified by alumina.

The electrolyte is a composition which mediates ionic conduction between the positive and negative electrodes. The electrolyte is prepared by dissolving a lithium salt such as lithium hexafluorophosphate in a nonaqueous solvent obtained by mixing together, for example, ethylene carbonate, dimethyl carbonate, ethyl methyl carbonate and propylene carbonate. Additives may be added to the electrolyte in order to enhance the stability, increase the safety and lower the resistance.

As mentioned above, the carbon black dispersion composition for batteries of the invention has an excellent carbon black dispersibility and an excellent shelf stability. By using this carbon black dispersion composition for batteries, it is possible to reduce the percent defectives and lower production costs in the manufacture of lithium-ion secondary batteries.

### EXAMPLES

The invention is illustrated more fully below by way of Examples and Comparative Examples, although the invention is not limited by these Examples. The BET specific surface areas are measured values obtained by the BET method.

### [Materials]

The materials used in the carbon black dispersion compositions for batteries in the Examples and Comparative Examples are shown below.

### Carbon Black:

| | |
|---|---|
| Acetylene black: | Denka Black Li-435 (referred to below as "Li-435"), from Denka Co., Ltd.; BET specific surface area, 136 m²/g |
| Acetylene black: | Denka Black Li-100 (referred to below as "Li-100"), from Denka Co., Ltd.; BET specific surface area, 68 m²/g |
| Ketjen black: | Carbon ECP (referred to below as "ECP"), from Lion Specialty Chemicals Co., Ltd.; BET specific surface area, 782 m²/g |

### Dispersants:

| | |
|---|---|
| Methyl Cellulose-1 (referred to below as "MC-1"): | from Shin-Etsu Chemical Co., Ltd.; viscosity of 2 wt% aqueous solutionat 20°C, 4 mPa·s; methoxy group degree of substitution (DS), 1.8 |
| Methyl Cellulose-2 (referred to below as "MC-2"): | from Shin-Etsu Chemical Co., Ltd.; viscosity of 2 wt% aqueous solutionat 20°C, 15 mPa·s; methoxy group degree of substitution (DS), 1.8 |

### [Radical Scavengers and Comparative Additives]

**Table 1**

| Type | Additive | Category |
|---|---|---|
| 1a | 2,6-di-tert-butyl-p-cresol | hindered phenol |
| 2a | pentaerythritol tetrakis[3-(3,5-di-tert-butyl-4-hydroxyphenyl)propionate] | hindered phenol |
| 1c | phenol | phenol |
| 1d | 3,9-bis(2,4-di-tert-butylphenoxy)-2,4,8,10-tetraoxa-3,9-diphosphaspiro-[5.5]undecane | phosphorus-based antioxidant |
| 1e | didodecyl 3,3'-thiodipropionate | sulfur-based antioxidant |

### [Preparation of Carbon Black Dispersion Composition for Batteries]

### Example 1

A carbon black dispersion composition for batteries was prepared by the following procedure.

A carbon black dispersion composition for batteries was obtained by powder mixing 1.3 g of acetylene black (Li-435) as the carbon black, 0.12 g (9 parts by weight per 100 parts by weight of the carbon black) of Methyl Cellulose-1 (MC-1) as the dispersant and 0.0008 g (0.06 part by weight per 100 parts by weight of the carbon black) of hindered phenol (a1), adding 14.8 g of N-methyl-2-pyrrolidone (NMP) to the mixture, pre-mixing for 5 minutes at a rotational speed of 2,000 rpm in a deaerating mixer (ARV-310 from Thinky Corporation), and then stirring the resulting dispersion for 30 seconds at a rotational speed of 10,000 rpm in a thin-film spin-type high-speed mixer (Filmix model 30-L from Primix Corporation).

### Example 2

Aside from changing the amount of hindered phenol (1a) added to 0.00024 g, a carbon black dispersion composition for batteries was obtained in the same way as in Example 1.

### Example 3

Aside from changing the hindered phenol (1a) to hindered phenol (2a), a carbon black dispersion composition for batteries was obtained in the same way as in Example 1.

### Comparative Example 1

Aside from not adding hindered phenol (1a), a carbon black dispersion composition for batteries was obtained in the same way as in Example 1.

### Comparative Example 2

Aside from using phenol (1c) instead of hindered phenol (1a), a carbon black dispersion composition for batteries was obtained in the same way as in Example 1.

### Comparative Example 3

Aside from using phosphorus-based antioxidant (1d) instead of hindered phenol (1a), a carbon black dispersion composition for batteries was obtained in the same way as in Example 1.

### Comparative Example 4

Aside from using sulfur-based antioxidant (1e) instead of hindered phenol (1a), a carbon black dispersion composition for batteries was obtained in the same way as in Example 1.

### Comparative Example 5

Aside from changing the amount of hindered phenol (1a) added to 0.00000013 g (0.00001 part by weight per 100 parts by weight of carbon black), a carbon black dispersion composition for batteries was obtained in the same way as in Example 1.

### Comparative Example 6

Aside from changing the amount of hindered phenol (1a) added to 0.078 g (6 parts by weight per 100 parts by weight of carbon black), a carbon black dispersion composition for batteries was obtained in the same way as in Example 1.

### Example 4

A carbon black dispersion composition for batteries was obtained by powder mixing 1.3 g of ketjen black (ECP) as the carbon black, 0.13 g (10 parts by weight per 100 parts by weight of the carbon black) of Methyl Cellulose-2 (MC-2) as the dispersant and 0.00186 g (0.14 part by weight per 100 parts by weight of the carbon black) of hindered phenol (a1), adding 17.1 g of NMP to the mixture, pre-mixing for 5 minutes at a rotational speed of 2,000 rpm in a deaerating mixer (ARV-310 from Thinky Corporation), and then stirring the resulting dispersion for 30 seconds at a rotational speed of 10,000 rpm in a thin-film spin-type high-speed mixer (Filmix model 30-L from Primix Corporation).

### Comparative Example 7

Aside from not adding hindered phenol (1a), a carbon black dispersion composition for batteries was obtained in the same way as in Example 4.

### Example 5

A carbon black dispersion composition for batteries was obtained by powder mixing 1.3 g of ketjen black (ECP) as the carbon black, 0.17 g (13 parts by weight per 100 parts by weight of the carbon black) of Methyl Cellulose-1 (MC-1) as the dispersant and 0.0039 g (0.3 part by weight per 100 parts by weight of the carbon black) of hindered phenol (a1), adding 20.2 g of NMP to the mixture, pre-mixing for 5 minutes at a rotational speed of 2,000 rpm in a deaerating mixer (ARV-310 from Thinky Corporation), and then stirring the resulting dispersion for 30 seconds at a rotational speed of 10,000 rpm in a thin-film spin-type high-speed mixer (Filmix model 30-L from Primix Corporation).

### Comparative Example 8

Aside from not adding hindered phenol (1a), a carbon black dispersion composition for batteries was obtained in the same way as in Example 5.

### Example 6

A carbon black dispersion composition for batteries was obtained by powder mixing 3.2 g of acetylene black (Li-100) as the carbon black, 0.22 g (7 parts by weight per 100 parts by weight of the carbon black) of Methyl Cellulose-1 (MC-1) as the dispersant and 0.0013 g (0.04 part by weight per 100 parts by weight of the carbon black) of hindered phenol (a1), adding 11.85 g of NMP to the mixture, pre-mixing for 5 minutes at a rotational speed of 2,000 rpm in a deaerating mixer (ARV-310 from Thinky Corporation), and then adding another 5.92 g of NMP and mixing for 5 minutes in the deaerating mixer. The resulting dispersion was stirred for 30 seconds at a rotational speed of 10,000 rpm in a thin-film spin-type high-speed mixer (Filmix model 30-L from Primix Corporation).

### Comparative Example 9

Aside from not adding hindered phenol (1a), a carbon black dispersion composition for batteries was obtained in the same way as in Example 6.

### [Methods of Evaluation]

The dispersibility of each of the carbon black dispersion compositions obtained as described above was evaluated with a rotational rheometer. That is, using a rotational rheometer (HAAKE MARS, from Thermo Fisher Scientific Inc.) and employing a cone/plate as the measurement jig, the temperature was set to 25°C and the shear viscosity of the composition at a shear rate of 20 m/s was measured. A lower shear viscosity signifies a better carbon black dispersibility. When the initial viscosity is 250 mPa·s or less, the carbon black dispersibility is regarded to be good.

Evaluation of the shelf stability of each of the carbon black dispersion compositions for batteries was carried out by measuring the shear viscosity of the composition after leaving it at rest for one week at a temperature of 35°C (viscosity after one week of storage), and determining the change in this value from the initial viscosity of the composition. A smaller change in viscosity of the dispersion indicates a better shelf stability. When the viscosity after one week of storage represents a change in viscosity from the initial viscosity of +200 mPa·s or less, the shelf stability of the carbon black dispersion composition for batteries is regarded to be good.

**Table 2**

| | Formulation | | | | | | | | Evaluation results | | |
|---|---|---|---|---|---|---|---|---|---|---|---|
| | Carbon black | | Dispersant | | | Radical scavenger and comparative additive | | | Initial viscosity (mPa s) | Viscosity after one week of storage (mPa s) | Change in viscosity (mPa s) |
| | Type | Content (wt%) | Type | Content (wt%) | Amount added ^{∗}1 (pbw) | Type | Content (wt%) | Amount added *2 (pbw) | | | |
| Example 1 | Li-435 | 8 | MC-1 | 0.74 | 9 | 1a | 0.005 | 0.06 | 166 | 215 | +49 |
| Example 2 | Li-435 | 8 | MC-1 | 0.74 | 9 | 1a | 0.0015 | 0.02 | 161 | 226 | +65 |
| Example 3 | Li-435 | 8 | MC-1 | 0.74 | 9 | 2a | 0.005 | 0.06 | 200 | 191 | -9 |
| Comparative Example 1 | Li-435 | 8 | MC-1 | 0.74 | 9 | - | - | - | 221 | 808 | +587 |
| Comparative Example 2 | Li-435 | 8 | MC-1 | 0.74 | 9 | 1c | 0.005 | 0.06 | 173 | 838 | +665 |
| Comparative Example 3 | Li-435 | 8 | MC-1 | 0.74 | 9 | 1d | 0.005 | 0.06 | 102 | 510 | +408 |
| Comparative Example 4 | Li-435 | 8 | MC-1 | 0.74 | 9 | 1e | 0.005 | 0.06 | 135 | 506 | +371 |
| Comparative Example 5 | Li-435 | 8 | MC-1 | 0.74 | 9 | 1a | 0.0000008 | 0.00001 | 159 | 460 | +301 |
| Comparative Example 6 | Li-435 | 8 | MC-1 | 0.74 | 9 | 1a | 0.48 | 6 | 147 | 45 | -102 |
| Example 4 | ECP | 7 | MC-2 | 0.70 | 10 | 1a | 0.01 | 0.14 | 70 | 241 | +171 |
| Comparative Example 7 | ECP | 7 | MC-2 | 0.70 | 10 | - | - | - | 80 | 424 | +344 |
| Example 5 | ECP | 6 | MC-1 | 0.78 | 13 | 1a | 0.018 | 0.3 | 221 | 371 | +150 |
| Comparative Example 8 | ECP | 6 | MC-1 | 0.78 | 13 | - | - | - | 289 | 761 | +472 |
| Example 6 | Li-100 | 15 | MC-1 | 1.04 | 7 | 1a | 0.006 | 0.04 | 106 | 122 | +16 |
| Comparative Example 9 | Li-100 | 15 | MC-1 | 1.04 | 7 | - | - | - | 125 | 254 | +129 |

| | | | | | | | | | | | |
|---|---|---|---|---|---|---|---|---|---|---|---|
| * 1 Amount of dispersant added per 100 parts by weight of carbon black *2 Amount of radical scavenger or comparative additive added per 100 parts by weight of carbon black | | | | | | | | | | | |

Compared with Comparative Example 1 in which a hindered phenolic compound was not added, the carbon black dispersion compositions for batteries of Examples 1 to 3, in each of which a suitable amount of hindered phenolic compound was added as a radical scavenger, exhibited a small change in viscosity after one week at rest and thus had improved shelf stabilities. The results obtained in Examples 4 to 6 and Comparative Examples 7 to 9 show that the carbon black dispersion compositions for batteries of Examples 4 to 6, in each of which a suitable amount of hindered phenolic compound was likewise added as a radical scavenger, had improved shelf stabilities.

In Comparative Example 2 in which an ordinary phenol lacking a radical scavenging ability was added instead of a hindered phenolic compound, and in Comparative Examples 3 and 4 in which a phosphorus-based or sulfur-based antioxidant was instead added, the shelf stability of the composition did not improve.

Also, in Comparative Examples 5 and 6, when the amount of hindered phenolic compound added as a radical scavenger was less than 0.0001 part by weight or more than 5 parts by weight per 100 parts by weight of carbon black, the change in viscosity after one week at rest was found to increase compared with Example 1.

### [Preparation of Positive Electrode Mixture Pastes]

Positive electrode mixture pastes were prepared as described below using the carbon black dispersion compositions for batteries obtained above in Examples 1 to 6.

First, 12.5 g of the carbon black dispersion composition for batteries of Example 1 and 13.3 g of an NMP solution (solution concentration, 7 wt%) of polyvinylidene fluoride (weight-average molecular weight, 630,000) were added to a mixing vessel and mixed for 3 minutes at a rotational speed of 2,000 rpm in a deaerating mixer (ARV-310, from Thinky Corporation). Next, 48.0 g of a ternary positive electrode active material (NCM622) and 2.65 g of N-methyl-2-pyrrolidone (NMP) were added thereto and the contents were mixed for 3 minutes at a rotational velocity of 2,000 rpm using a deaeration mixer, thereby giving a positive electrode mixture paste having a solids concentration of 64 wt%.

Positive electrode mixture pastes were obtained in the same way using the carbon black dispersion compositions for batteries from Examples 2 to 6. Each of these positive electrode mixture pastes uniformly dispersed and exhibited good coating properties.

### [Production of Positive Electrodes for Lithium-Ion Secondary Batteries]

Positive electrodes for lithium-ion secondary batteries were produced as described below using the positive electrode mixture pastes obtained above.

The positive electrode mixture pastes were coated onto current collectors made of aluminum foil (thickness, 20 µm; width, 14 mm) and dried using an electrode coater/dryer (LiB-W140, from Clean Technology Inc.). The coating and drying conditions were set to a coating thickness of 180 µm, a conveying speed of 0.2 m/min and a temperature within the drying oven (oven length, 50 cm) of between 115°C and 120°C.

Next, using a tabletop roll press (SA-602, from Tester Sangyo Co., Ltd.), the dry coating obtained by the above coating/drying treatment was rolled together with a current collector under a linear pressure of 200 kg/cm, giving a positive electrode for a lithium-ion secondary battery. Positive electrodes for lithium-ion secondary batteries were normally produced in this way using each of the above positive electrode mixture pastes.

## Claims

1. A carbon black dispersion composition for a battery, comprising carbon black, a dispersant, N-methyl-2-pyrrolidone, and from 0.0001 to 5 parts by weight of a hindered phenolic compound per 100 parts by weight of the carbon black.

2. The composition of claim 1, wherein the carbon black content is from 5 to 20 wt%.

3. The composition of claim 1 or 2, wherein the carbon black has a BET specific surface area of from 30 to 1,500 m²/g.

4. The composition of any one of claims 1 to 3, wherein the dispersant is added in an amount of from 1 to 20 parts by weight per 100 parts by weight of the carbon black.

5. The composition of any one of claims 1 to 4, wherein the dispersant is at least one compound selected from the group consisting of methyl cellulose, (hydroxypropyl)methyl cellulose, polyvinyl alcohol and polyvinyl pyrrolidone.

6. The composition of any one of claims 1 to 5, wherein the hindered phenolic compound is at least one compound selected from the group consisting of 2,6-di-tert-butyl-p-cresol, pentaerythritol tetrakis[3-(3,5-di-tert-butyl-4-hydroxyphenyl)propionate], [oxalylbis(azanediyl)]bis(ethane-2,1-diyl)bis[3-(3,5-di-tert-butyl-4-hydroxyphenyl)propanoate], 2,4,6-tris(3',5'-di-tert-butyl-4'-hydroxybenzyl)mesitylene, 4-[[4,6-bis(n-octylthio)-1,3,5-triazine-2-yl]amino]-2,6-di-tert-butylphenol, 2,6-di-tert-butyl-4-methoxyphenol and 1,3,5-tris(3,5-di-tert-butyl-4-hydroxybenzyl)-1,3,5-triazine-2,4,6(1H, 3H, 5H)-trione.

7. A mixture paste for a positive electrode, comprising the carbon black dispersion composition of any one of claims 1 to 6, a positive electrode active material and a binder.

8. A positive electrode for a lithium-ion secondary battery, comprising a current collector and a positive electrode mixture layer that is a dry coating of the mixture paste of claim 7 formed on the current collector.

9. A lithium-ion secondary battery comprising the positive electrode of claim 8, a negative electrode, an electrolyte and a separator.
